# NEUE EUROPÄISCHE PATENTSCHRIFT

(11) **EP 3 490 917 B2**
(45) Veröffentlichungstag und Bekanntmachung des Hinweises auf die Entscheidung über den Einspruch: **03.09.2025**
(45) Hinweis auf die Patenterteilung: 25.11.2020
(21) Anmeldenummer: 17739573.8
(22) Anmeldetag: 13.07.2017
(51) Int. Cl.: B65G 47/71

(54) **VERFAHREN ZUM VERTEILEN EINER VIELZAHL AN ARTIKELN EINES MASSENSTROMES AN MEHRERE GASSEN UND VORRICHTUNG ZUM UMGANG MIT EINER VIELZAHL AN ARTIKELN EINES MASSENSTROMES**
METHOD FOR DISTRIBUTING A MULTIPLICITY OF MASS-FLOW ARTICLES TO A PLURALITY OF AISLES, AND APPARATUS FOR HANDLING A MULTIPLICITY OF MASS-FLOW ARTICLES
PROCÉDÉ DE DISTRIBUTION D'UN GRAND NOMBRE D'ARTICLES D'UN FLUX MASSIQUE SUR PLUSIEURS VOIES ET DISPOSITIF DE MANIPULATION D'UN GRAND NOMBRE D'ARTICLES D'UN FLUX MASSIQUE

(30) Priorität: 01.08.2016 DE 102016214162
(43) Veröffentlichungstag der Anmeldung: 05.06.2019
(73) Patentinhaber: KRONES Aktiengesellschaft, 93073 Neutraubling (DE)
(72) Erfinder: FIEGLER, Rudolf, 93073 Neutraubling (DE)
(74) Vertreter: Benninger, Johannes
(86) Internationale Anmeldenummer: PCT/EP2017/067744
(87) Internationale Veröffentlichungsnummer: WO 2018/024459

(56) Entgegenhaltungen:
- EP-A2- 1 767 474
- DE-A1- 102009 046 133
- DE-A1- 102011 085 724
- DE-U1- 202007 013 933
- GB-A- 765 013
- JP-A- H11 165 856
- US-A1- 2007 246 328
- US-A1- 2010 219 043
- US-A1- 2014 332 344

## Beschreibung

Die vorliegende Erfindung betrifft ein Verfahren zum Verteilen einer Vielzahl an Artikeln eines ungeordneten Massenstromes an mehrere benachbarte Gassen mit den Merkmalen des unabhängigen Verfahrensanspruchs 1. Zudem betrifft die Erfindung eine Vorrichtung zum Umgang mit einer Vielzahl an Artikeln eines ungeordneten Massenstromes mit den Merkmalen des unabhängigen Anspruchs 13.

Bei der Bearbeitung und Handhabung von Artikeln oder Stückgütern, insbesondere von Getränkebehältnissen, können zwischen einzelnen Arbeitsstationen Förderstrecken vorgesehen sein, mit denen ungeordnete Artikel eingeteilt bzw. mehreren Gassen zugeführt und anschließend in Richtung einer jeweiligen Arbeitsstation bewegt werden können. Solche Fördergassen können durch einzelne Gassenbleche abgeteilt sein, wobei in einer jeweiligen Gasse eine Reihe hintereinander stehender Artikel bewegt wird. Die einzelnen Reihen werden mittels der Gassenbleche parallel oder zumindest näherungsweise parallel geführt.

Eine solche Vorrichtung nach dem Oberbegriff des Anspruchs 11 sowie ein Verfahren nach dem Oberbegriff des Anspruchs 1 ist beispielsweise aus der DE 195 14 928 C2 bekannt. Diese bekannte Vorrichtung ist zum Beschicken einer Gassenverteilung für Gefäße ausgebildet. Sie umfasst einen Dosierförderer sowie einen parallel dazu verlaufenden, seitlich angeschlossenen mehrbahnigen Zuförderer. An den Zuförderer schließt ein Drängeltisch an, in dessen Endbereich eine Gassenverteilung angeordnet ist. Über den Zuförderer werden die Gefäße ungeordnet an den Drängeltisch weitergegeben. Im Bereich des Drängeltisches sind Vibratoren vorgesehen, um die Gefäße unter leichtem Staudruck in die im Endbereich des Drängeltisches ausgebildete Gassenverteilung einzubringen. Die Zuführung von Gefäßen an den Drängeltisch erfolgt in Abhängigkeit seines jeweiligen Belegungszustandes, welcher sensorisch erkannt werden kann.

Weiter offenbart die EP 1 767 474 A2 eine Vorrichtung zum Handhaben von Gegenständen, wie Kartons. Die Vorrichtung der EP-Schrift umfasst eine Transporteinheit zum Handhaben eines Objekts, einen beweglichen Transporter zum Versorgen der Objekte und eine Greifeinheit mit einer Halterung zum Manipulieren derselben. Die Greifeinheit weist mindestens einen sich selbst bewegenden Träger auf, wobei auf dem Träger eine Halterung und ein motorischer Antrieb zum Bewegen des Trägers angeordnet sind.

Insbesondere bei einem Betrieb einer solchen Vorrichtung mit hohem Durchsatz kann es sein, dass Behälter bei der Zuführung in die jeweiligen Gassen umkippen. Ein solches Umkippen stellt eine schwerwiegende Störung im Förderablauf dar und kann die Behälterzuführung für einzelne oder mehrere der Gassen blockieren, so dass eine Unterbrechung des Förderprozesses notwendig wird.

Angesichts des bekannten Standes der Technik kann eine vorrangige Aufgabe der Erfindung darin gesehen werden, eine gattungsgemäße Vorrichtung sowie ein gattungsgemäßes Verfahren zur Verfügung zu stellen, mittels deren bei hohem Durchsatz unter vermindertem Risiko einer Störung eine Zuführung von Artikeln aus einem ungeordneten Massenstrom an mehrere Gassen erfolgen kann. Die Vorrichtung soll hierbei einen einfachen Aufbau besitzen. Weiter soll das Verfahren einfach umgesetzt werden können.

Die obige Aufgabe wird durch ein Verfahren und eine Vorrichtung gelöst, welche die Merkmale in den Schutzansprüchen 1 bzw. 11 umfassen. Weitere vorteilhafte Ausgestaltungen werden durch die jeweiligen Unteransprüche beschrieben.

Zur Lösung der Aufgabe schlägt die Erfindung ein Verfahren zum Verteilen einer Vielzahl an Artikeln eines ungeordneten Massenstromes an mehrere benachbarte Gassen vor. Die mehreren benachbarten Gassen verlaufen hierbei parallel zueinander.

Im Rahmen eines ersten Schrittes des erfindungsgemäßen Verfahrens wird eine Vielzahl an Artikeln in einem ungeordneten Massenstrom transportiert. Denkbar ist beispielsweise, dass die Vielzahl an Artikeln über wenigstens eine Horizontalfördereinrichtung transportiert wird, auf welcher die Vielzahl an Artikel aufstehen bzw. stehend befördert werden. Die einzelnen Artikel der Vielzahl können somit eine willkürliche Orientierung zueinander besitzen. Wenn im weiteren Zusammenhang von einer Vielzahl an Artikeln die Rede ist, so ist damit in erster Linie eine nicht endliche Anzahl von ununterbrochen nachgeförderten Artikeln gemeint. Selbstverständlich können auch kleinere Artikelportionen mit dem erfindungsgemäßen Verfahren geordnet und in verschiedene Gassen aufgeteilt werden, doch zeigt das Verfahren seinen besonderen Vorteil bei der Verarbeitung einer Vielzahl, d.h. einer nicht bezifferten großen Anzahl von Artikeln.

In einem weiteren Verfahrensschritt ist vorgesehen, dass die einzelnen Ist-Positionen der Vielzahl an Artikeln während ihres Transportes im ungeordneten Massenstrom sensorisch erkannt werden. Sofern der Transport der Vielzahl an Artikeln über die soeben erwähnte wenigstens eine Horizontalfördereinrichtung erfolgt, kann die Vielzahl an Artikeln während des sensorischen Erkennens über die wenigstens eine Horizontalfördereinrichtung bewegt werden. Weiterhin kann vorgesehen sein, dass nicht nur die jeweiligen Ist-Positionen der einzelnen Artikel sensorisch erkannt werden, sondern auch die jeweiligen Ist-Orientierungen der Artikel. Da es sich hierbei insbesondere um nicht zylindrische Behälter bzw. um Behälter mit mehreckigen Außenmantelflächen handeln kann, ist für eine Einordnung in die verschiedenen Gassen nicht nur die Erfassung der Ist-Positionen wichtig, sondern gleichermaßen die Erfassung der Ausrichtung jedes einzelnen Artikels.

In einem weiteren Schritt wird die Vielzahl an Artikeln aus dem ungeordneten Massenstrom unter Berücksichtigung der sensorisch erkannten einzelnen Ist-Positionen und/oder unter Berücksichtigung der sensorisch erkannten einzelnen Ist-Ausrichtungen bzw. Ist-Orientierungen der einzelnen Artikel abgeholt. Denkbar ist hierbei, dass ein nachfolgend noch beschriebener Manipulator bzw. eine Klemm- und/oder Greifeinrichtung die Vielzahl an Artikeln aus dem ungeordneten Massenstrom unter Berücksichtigung der sensorisch erkannten einzelnen Ist-Positionen und/oder der Ist-Ausrichtungen abholt. Der Manipulator bzw. der mindestens eine Manipulator kann mindestens eine Aufnahmeposition zum temporären Entgegennehmen eines jeweiligen Artikels aufweisen. Denkbar ist auch, dass der mindestens eine Manipulator mehrere bzw. wenigstens zwei Aufnahmepositionen besitzt, wobei der mindestens eine Manipulator über jede der mehreren bzw. wenigstens zwei Aufnahmepositionen jeweils einen Artikel aus dem ungeordneten Massenstrom temporär entgegennehmen kann. Bewährt haben sich hierbei Ausführungsformen, bei welchen die mehreren bzw. wenigstens zwei Aufnahmepositionen unter Berücksichtigung der sensorisch erkannten jeweiligen Ist-Positionen bzw. Ist-Ausrichtungen relativ zueinander verstellt werden können. Die mehreren bzw. wenigstens zwei Aufnahmepositionen können beispielsweise durch Packtulpen bzw. durch Mittel ausgebildet sein, über welche die jeweiligen Artikel durch Beaufschlagung mit Unterdruck temporär am mindestens einen Manipulator festgesetzt werden können.

Weiter ist vorgesehen, dass die Vielzahl abgeholter Artikel in eine jeweilige Soll-Position überführt werden, woraus resultierend die einzelnen in ihre jeweilige Soll-Position überführten Artikel jeweils mit einer der mehreren Gassen fluchten. Der vorherig erwähnte mindestens eine Manipulator kann hierzu ggf. einen ersten Artikel aus dem ungeordneten Massenstrom abholen und in seine jeweilige Soll-Position überführen, woraus resultierend der erste in seine jeweilige Soll-Position überführte Artikel mit einer ersten Gasse aus den mehreren Gassen fluchtet. Zeitlich nachfolgend kann der mindestens eine Manipulator einen zweiten Artikel aus dem ungeordneten Massenstrom abholen und in seine jeweilige Soll-Position überführen, woraus resultierend der zweite in seine Soll-Position überführte Artikel mit einer zweiten Gasse aus den mehreren Gassen fluchtet. Vorstellbar ist auch, dass der mindestens eine Manipulator einen ersten Artikel und einen zweiten Artikel aus dem ungeordneten Massenstrom abholt, gemeinsam in eine jeweilige Soll-Position überführt, woraus resultierend der erste Artikel mit einer ersten Gasse aus den mehreren Gassen fluchtet und der zweite Artikel mit einer zweiten Gasse aus den mehreren Gassen fluchtet. Hierbei kann der mindestens eine Manipulator den ersten Artikel und den zweiten Artikel zumindest näherungsweise zeitgleich aus dem ungeordneten Massenstrom abholen.

Bei der Überführung der Artikel in ihre jeweiligen Soll-Positionen können gleichzeitig gewünschte Soll-Ausrichtungen für die Artikel hergestellt werden, wobei die Artikel jeweils um definierte Drehwinkel um eine jeweilige Hochachse verdreht werden können. Bei einer solchen Drehausrichtung der Artikel oder Behälter während der Positionierung erfolgt die Drehrichtung vorzugsweise in einer Drehrichtung, dass ein möglichst kleiner Drehwinkel benötigt wird. So ist es nicht sinnvoll, einen Artikel mit quadratischem Querschnitt in einer Rechtsdrehung um einen Drehwinkel von beispielsweise 85° zu rotieren, wenn eine alternative Linksdrehung mit einem viel kleineren Drehwinkel von lediglich 5° zum selben Ergebnis - der rechtwinkeligen Ausrichtung aufeinander folgender Artikel bzw. Behälter in der jeweiligen Gasse - führen würde.

Wie zuvor erwähnt, kann der mindestens eine Manipulator zum Abholen bzw. zum temporären Entgegennehmen von Artikeln mindestens ein Mittel zur Beaufschlagung des abzuholenden Artikels mit Unterdruck besitzen. Weiter kann der mindestens eine Manipulator durch mindestens eine bewegliche und im Raum steuerbare Klemm- und/oder Greifeinrichtung ausgebildet sein, was insbesondere einen entsprechend ausgestatteten Greif-Roboter, Portalroboter mit Greifarm oder Mehrachsroboter mit Greifarm meint. Der Manipulator kann wahlweise auch einen Deltakinematik-Roboter mit daran angeordnetem Greifarm umfassen.

Weiter wird die Vielzahl an in ihre jeweilige Soll-Position überführten Artikeln in die mehreren Gassen entlang eines jeweiligen definierten Verbringungsweges befördert, wobei die einzelnen Artikel der Vielzahl bei Beförderung entlang des jeweiligen definierten Verbringungsweges ihre fluchtende Orientierung gegenüber ihrer jeweiligen Gasse beibehalten. Insbesondere kann die Vielzahl an in ihre jeweilige Soll-Position überführten Artikel über mindestens ein Transportband in die mehreren Gassen bewegt werden. Eine Transportrichtung des mindestens einen Transportbandes kann daher mit den mehreren Gassen fluchten. Zudem können eine Transportrichtung des mindestens einen Transportbandes und eine Transportrichtung der wenigstens einen Horizontalfördereinrichtung miteinander fluchten.

Vorzugsweise können die abführenden Gassentransporteure derart variabel einstellbar sein, dass die Artikel oder Behälter mit geringem Abstand zueinander drucklos aneinander stehend weiterbefördert werden. Die Abstände der in den einzelnen Gassen transportierten Behälter oder Artikel sollten normalerweise relativ gering sein. Auf diese Abstände hat nicht nur der Manipulator eine Einfluss, sondern auch die Transport- bzw. Bandgeschwindigkeit.

Vorstellbar ist zudem, dass die Vielzahl an Artikeln über wenigstens ein Transportband in mindestens einer Reihe transportiert werden und aus der mindestens einen Reihe in den ungeordneten Massenstrom gebracht werden. Beispielsweise kann die Vielzahl an Artikeln eine Arbeitsstation verlassen, hierauf in genau einer Reihe über das wenigstens eine Transportband transportiert werden und aus der genau einen Reihe in den ungeordneten Massenstrom gebracht werden. In der Praxis kann es sein, dass die Vielzahl an Artikeln eine Etikettierstation in genau einer Reihe verlassen, wobei über das mindestens eine Transportband die genau eine Reihe in den ungeordneten Massenstrom gebracht wird.

Es kann zudem sein, dass die Artikel im ungeordneten Massenstrom über wenigstens eine Horizontalfördereinrichtung transportiert werden. Insbesondere kann es hierbei sein, dass die wenigstens eine Horizontalfördereinrichtung gegenüber dem wenigstens einen Transportband eine vergrößerte sich lotrecht zur Bewegungsrichtung der Vielzahl an Artikeln erstreckende Förderbreite besitzt. Die wenigstens eine Horizontalfördereinrichtung kann somit als Puffersystem ausgebildet sein, bei welchem Puffersystem eine Vielzahl an gespeicherten Artikeln im ungeordneten Massenstrom bewegt wird.

Außerdem kann es sein, dass die einzelnen Ist-Positionen der Vielzahl an Artikeln sowie wahlweise auch ihre Ist-Orientierungen während ihres Transportes im ungeordneten Massenstrom mittels mindestens einer vorzugsweise als Kamera ausgebildeten optischen Erfassungseinrichtung sensorisch erkannt werden. Sofern die Artikel, wie vorhergehend bereits erwähnt, über wenigstens eine Horizontalfördereinrichtung im ungeordneten Massenstrom transportiert werden, kann sich sinnvollerweise ein Detektionsbereich der mindestens einen vorzugsweise als Kamera ausgebildeten optischen Erfassungseinrichtung zumindest abschnittsweise über die wenigstens eine Horizontalfördereinrichtung erstrecken. Insbesondere kann ein Detektionsbereich der mindestens einen vorzugsweise als Kamera ausgebildeten optischen Erfassungseinrichtung eine vollständige Förderbreite der wenigstens einen Horizontalfördereinrichtung abdecken. Darüber hinaus ist vorstellbar, dass die mindestens eine optische Erfassungseinrichtung als Lasersensor ausgebildet ist. In weiteren denkbaren Ausführungsformen kann die mindestens eine optische Erfassungseinrichtung zudem einen Volumenscanner umfassen, mittels welchen Volumenscanners eine Ist-Befüllung von auf der wenigstens einen Horizontalfördereinrichtung aufstehender und als Getränkebehältnisse ausgebildeter Artikel festgestellt bzw. überprüft wird. Unter Wirkverbindung mit dem Volumenscanner kann der mindestens eine Manipulator ggf. Getränkebehältnisse aussondern, deren Ist-Befüllung von einer vorgegebenen Soll-Befüllung abweicht. Insbesondere kann der mindestens eine Manipulator Getränkebehältnisse, deren Ist-Befüllung von einer vorgegebenen Soll-Befüllung abweicht, von der wenigstens einen Horizontalfördereinrichtung entnehmen und ggf. auf einer Ablage abstellen oder auf ein Transportband für ausgesonderte Getränkebehältnisse übergeben.

Weiter ist denkbar, dass mindestens zwei Artikel aus dem ungeordneten Massenstrom abgeholt und zeitlich überlagert in ihre jeweilige Soll-Position überführt werden. Das Abholen der mindestens zwei Artikel aus dem ungeordneten Massenstrom sowie das Überführen der mindestens zwei Artikel in ihre jeweilige Soll-Position können mittels des vorherig bereits erwähnten mindestens einen Manipulators erfolgen.

Insbesondere hat sich das Verfahren für Ausführungsformen bewährt, bei welchen es sich bei der Vielzahl an Artikeln um eine Vielzahl an Getränkebehältnissen mit mehreckiger Querschnittsfläche handelt. Beispielsweise können die einzelnen Artikel der Vielzahl eine rechteckige Querschnittsfläche besitzen. In diesem Fall ist die oben erwähnte gleichmäßig fluchtende Ausrichtung der Artikel oder Getränkebehältnisse wichtig, damit die Behälter in regelmäßiger Anordnung und mit fluchtenden Seitenflächen in den Gassen transportiert werden können.

In denkbaren Ausführungsformen kann es zudem sein, dass die mehreren Gassen mit einer gleichmäßigen Anzahl an Artikeln beschickt werden bzw. dass den mehreren Gassen über den Zeitverlauf eine gleichmäßige Anzahl an Artikeln zugeführt wird. Demnach können den mehreren Gassen abwechselnd Artikel zugeführt werden bzw. es können somit abwechselnd Artikel in die mehreren Gassen eingebracht werden.

In weiteren Ausführungsformen kann es sein, dass unter Berücksichtigung der jeweiligen erkannten Ist-Positionen Wegstrecken zur Überführung des jeweiligen Artikels in eine fluchtende Orientierung für die mehreren Gassen jeweils überprüft werden und die Wegstrecke mit kürzestem Betrag ihrer Erstreckung festgestellt bzw. ermittelt wird. Weiter kann die Soll-Position für den jeweiligen Artikel in Abhängigkeit des kürzesten Betrages der Wegstrecke ausgewählt bzw. vorgegeben werden. Derartige Ausführungsformen haben sich bewährt, um den Durchsatz des erfindungsgemäßen Verfahrens optimieren zu können.

Auch kann es sein, dass
- im Rahmen der sensorischen Erkennung einzelne Drehorientierungen der Vielzahl an Artikeln während ihres Transportes im ungeordneten Massenstrom festgestellt werden, und dass
- die Vielzahl an Artikeln unter Berücksichtigung der jeweils festgestellten Drehorientierung in eine bestimmte drehkonforme Ausrichtung gebracht werden, so dass die Vielzahl an Artikeln ihre jeweilige Soll-Position in der jeweiligen drehkonformen Ausrichtung erreichen.

Derartige Ausführungsformen haben sich insbesondere bewährt, sofern die Artikel durch Getränkebehältnisse mit mehreckigem Querschnitt ausgebildet sind. Die mehreren Gassen sind jeweils derart ausgebildet, dass die jeweiligen Artikel mit geringem Spiel in den mehreren Gassen befördert werden können. Sofern die Artikel daher einen mehreckigen Querschnitt besitzen, kann eine drehkonforme Ausrichtung der Artikel vorteilhaft sein, damit die jeweiligen Artikel in ihre jeweilige Gasse eintreten und ggf. spielfrei in der jeweiligen Gasse bewegt werden können.

Es kann sein, dass Artikel, deren festgestellte Drehorientierung von der drehkonformen Ausrichtung abweicht, zeitlich während ihrer Überführung in ihre jeweilige Soll-Position in die jeweilige bestimmte drehkonforme Ausrichtung gebracht werden. Eine Bewegung des jeweiligen Artikels aus dem ungeordneten Massenstrom in Richtung seiner jeweiligen Soll-Position sowie ein Drehen des jeweiligen Artikels für seine drehkonforme Ausrichtung können somit zeitlich überlagert sein.

Wie erwähnt, kann es sinnvoll sein, beim Drehen der Behälter die Drehrichtung zu bevorzugen, die einen kleineren Drehwinkel benötigt. Auf diese Weise kann schneller gedreht und schneller ein weiterer Artikel erfasst, positioniert und/oder gedreht werden.

Die Erfindung betrifft darüber hinaus eine Vorrichtung zum Umgang mit einer Vielzahl an Artikeln eines ungeordneten Massenstromes. Merkmale, welche vorhergehend bereits zu diversen Ausführungsformen des Verfahrens beschrieben wurden, können ebenso bei nachfolgend beschriebener Vorrichtung vorgesehen sein und werden daher nicht redundant erwähnt. Auch können nachfolgend beschriebene Merkmale, welche die Vorrichtung betreffen, ggf. für das vorherig bereits beschriebene Verfahren Verwendung finden.

Die Vorrichtung umfasst wenigstens eine Horizontalfördereinrichtung zum Transport der Vielzahl an Artikeln im ungeordneten Massenstrom. Der wenigstens einen Horizontalfördereinrichtung kann eine Einrichtung zu- und/oder funktional vorgeordnet sein, mittels welcher aus einem in einer Reihe oder in mehreren benachbarten Reihen bewegtem Artikelstrom ein ungeordneter Massenstrom für die wenigstens eine Horizontalfördereinrichtung ausgebildet wird.

Weiter umfasst die Vorrichtung mindestens eine Sensorik, über welche eine jeweilige Ist-Position der im ungeordneten Massenstrom transportierten Artikel erkannt werden kann. Wahlweise umfasst die Vorrichtung mindestens eine Sensorik, über welche eine jeweilige Ist-Orientierung (Drehorientierung) der im ungeordneten Massenstrom transportierten Artikel erkannt werden kann. Ein Detektionsbereich bzw. Erfassungsbereich der mindestens einen Sensorik kann sich daher zumindest abschnittsweise und vorzugsweise vollständig über eine Förderbreite der wenigstens einen Horizontalfördereinrichtung erstrecken.

Bestandteil der Vorrichtung sind zudem mehrere benachbarte Gassen für Artikel, welche auf die wenigstens eine Horizontalfördereinrichtung in einer Strömungsrichtung der Vielzahl an Artikeln folgen. Die Gassen sind erfindungsgemäß durch mehrere parallel zueinander orientierte Trennwände bereitgestellt, zwischen welchen Trennwänden sich die einzelnen Artikel der Vielzahl mit geringem Spiel bewegen können. Unterhalb der mehreren Gassen kann zur Bewegung der Artikel mindestens ein Transportband angeordnet sein. Die den Gassen zugeordneten Transporteure können wahlweise in ihren Geschwindigkeiten in einer Weise reguliert werden, dass die Artikel sehr nahe, aber weitgehend staufrei bzw. drucklos aufeinander folgend transportiert werden.

Neben den bereits erwähnten Komponenten umfasst die Vorrichtung weiterhin mindestens einen Manipulator, welcher
a) zum Abholen wenigstens eines im ungeordneten Massenstrom transportierten Artikels mit der mindestens einen Sensorik in Wirkverbindung steht und welcher
b) zum Überführen des jeweiligen wenigstens einen aus dem ungeordneten Massenstrom abgeholten Artikels in eine jeweilige bestimmte Soll-Position ausgebildet ist, in welcher jeweiligen bestimmten Soll-Position der jeweilige wenigstens eine Artikel mit mindestens einer der mehreren Gassen fluchtet.

Erfindungsgemäß steht der mindestens eine Manipulator und die mindestens eine Sensorik mit einer Steuerungseinheit in Verbindung. Der mindestens eine Manipulator kann über die Steuerungseinheit unter Berücksichtigung der jeweiligen mittels der mindestens einen Sensorik erkannten Ist-Position zum Abholen des jeweiligen wenigstens einen im ungeordneten Massenstrom transportierten Artikels ansteuerbar sein. Weiter kann der mindestens eine Manipulator über die Steuerungseinheit zum Überführen des jeweiligen wenigstens einen aus dem ungeordneten Massenstrom abgeholten Artikels in seine jeweilige bestimmte Soll-Position ansteuerbar sein. Informationen zu den jeweiligen Soll-Positionen können auf der Steuerungseinheit abgelegt sein.

In besonders bevorzugten Ausführungsformen kann die Vorrichtung einen Zulauf umfassen, welcher wenigstens ein Transportband besitzt, wobei das wenigstens eine Transportband der wenigstens einen Horizontalfördereinrichtung unmittelbar vorgeordnet ist. Über das wenigstens eine Transportband kann die Vielzahl an Artikeln in mindestens einer Reihe transportiert werden, wobei eine Förderbreite der wenigstens einen Horizontalfördereinrichtung gegenüber einer Förderbreite des wenigstens einen Transportbandes vergrößert ausgebildet ist. In der Praxis haben sich Ausführungsformen bewährt, bei welchen der Zulauf genau ein Transportband besitzt bzw. bei welchen die Vielzahl an Artikeln über das wenigstens eine Transportband in genau einer Reihe an die wenigstens eine Horizontalfördereinrichtung weitergegeben bzw. weitergeführt wird. Die Vielzahl an Artikeln kann eine Arbeitsstation in der genau einen Reihe verlassen und sodann in der genau einen Reihe an die wenigstens eine Horizontalfördereinrichtung weitergegeben bzw. weitergeführt werden. Die Arbeitsstation kann beispielsweise als Etikettierstation bzw. Etikettiervorrichtung ausgebildet sein.

Weiter kann die mindestens eine Sensorik wenigstens eine optische Erfassungseinrichtung besitzen. Insbesondere kann die wenigstens eine optische Erfassungseinrichtung mindestens ein Kamerasystem und/oder mindestens einen Lasersensor besitzen. Auch ist denkbar dass die wenigstens eine optische Erfassungseinrichtung, wie vorhergehend bereits erwähnt, einen Volumenscanner zum Ermitteln bzw. Feststellen einer Ist-Befüllung der Vielzahl im ungeordneten Massenstrom transportierter und als Getränkebehältnisse ausgebildeter Artikel umfasst.

Weiter kann es sein, dass der mindestens eine Manipulator zum gemeinsamen Abholen wenigstens zweier im ungeordneten Massenstrom transportierter Artikel sowie zum gemeinsamen Überführen der jeweiligen wenigstens zwei abgeholten Artikel in ihre jeweilige bestimmte Soll-Position ausgebildet ist.

Vorstellbar ist auch, dass die mindestens eine Sensorik zum Feststellen einzelner Drehorientierungen der Vielzahl an Artikeln des ungeordneten Massenstromes ausgebildet ist und dass der mindestens eine Manipulator zum Herstellen einer drehkonformen Orientierung für die Vielzahl an Artikeln mit der mindestens einen Sensorik in Wirkverbindung steht.

Denkbar ist zudem, dass der mindestens eine Manipulator wenigstens einen Deltakinematik-Roboter umfasst. Auch kann der mindestens eine Manipulator wenigstens eine Handhabungseinrichtung umfassen, welche zum Abholen und Überführen der einzelnen Artikel aus der Vielzahl in ihre jeweilige Soll-Position ausgebildet ist.

Weiter kann es sein, dass dem mindestens einen Manipulator wenigstens eine Arbeitsstation funktional nachgeordnet ist, über welche der relative Abstand unmittelbar aufeinanderfolgender für eine jeweilige Gasse vorgesehener Artikel vorgegeben werden kann.

Zudem kann die Vorrichtung zum Umgang mit einer Vielzahl durch Getränkebehältnisse mit mehreckiger Querschnittsfläche ausgebildeten Artikeln vorbereitet sein.

Weiter sei erwähnt, dass auf die mehreren Gassen in einer Strömungsrichtung der Artikel bzw. Getränkebehältnisse eine Einrichtung zum Bilden einer palettierfähigen Lage aus den Artikeln bzw. eine Einrichtung zum Überführen der Artikel auf eine Palette folgen kann.

In denkbaren Ausführungsformen kann genau ein Manipulator vorgesehen sein. Es ist jedoch darüber hinaus vorstellbar, dass mehrere bzw. mindestens zwei Manipulatoren vorgesehen sind, welche zum Überführen der einzelnen Artikel aus der Vielzahl in ihre jeweilige Soll-Position zusammenwirken. Die mehreren bzw. mindestens zwei Manipulatoren können hierbei jeweils als Deltakinematik-Roboter ausgebildet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsform der erfindungsgemäßen Vorrichtung.
Fig. 2 zeigt einzelne Schritte, wie sie bei einer denkbaren Ausführungsform des erfindungsgemäßen Verfahrens vorgesehen sein können.

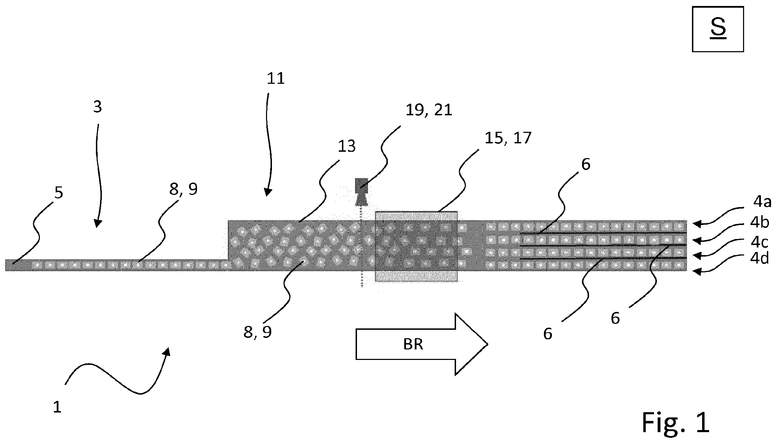

Für gleiche oder gleich wirkende Elemente der Erfindung verwendet die Fig. 1 jeweils gleiche Bezugsziffern. Im Interesse einer besseren Übersichtlichkeit sind zudem nur solche Elemente mit Bezugsziffern bezeichnet, die für die Beschreibung erforderlich sind. Die dargestellten Ausführungsformen stellen lediglich Beispiele dar, wie die Erfindung ausgestaltet sein kann und stellen keine abschließende Begrenzung dar.

Die Fig. 1 zeigt eine schematische Ansicht einer Ausführungsform der erfindungsgemäßen Vorrichtung 1. Die Vorrichtung 1 umfasst einen Zulauf 3 mit einem Transportband 5. Über den Zulauf 3 bzw. über das Transportband 5 werden durch Getränkebehältnisse 8 ausgebildete Artikel 9 stehend und in genau einer Reihe hintereinander bewegt. Die Vielzahl an Artikeln 9 bzw. Getränkebehältnissen 8 können beispielsweise eine hier nicht näher dargestellte Etikettiervorrichtung als einreihigen Artikelstrom verlassen haben. In diesem Fall kann die Vorrichtung 1 der Etikettiervorrichtung als nachgeordnete Vorrichtung 1 betrachtet werden.

Unmittelbar auf den Zulauf 3 bzw. das Transportband 5 folgt eine Horizontalfördereinrichtung 13. Die Bewegungsrichtung der Artikel 9 durch das Transportband 5 und durch die Horizontalfördereinrichtung 13 ist in Fig. 1 mittels der Pfeildarstellung BR angedeutet. Die schematische Darstellung der Fig. 1 lässt hierbei erkennen, dass eine schräg bzw. senkrecht zur Bewegungsrichtung BR der Artikel 9 orientierte Förderbreite der Horizontalfördereinrichtung 13 gegenüber einer schräg bzw. senkrecht zur Bewegungsrichtung BR der Artikel 9 orientierten Förderbreite des Transportbandes 5 deutlich vergrößert ist. Die Horizontalfördereinrichtung 13 arbeitet hierdurch als Puffersystem 11, mittels dessen die Artikel 9 vor Zuführung an nachfolgend noch beschriebene Gassen 4a bis 4d temporär zwischengespeichert werden können.

Über die Förderbreite der Horizontalfördereinrichtung 13 erstreckt sich ein Detektionsbereich einer Sensorik 19, die im gezeigten Ausführungsbeispiel als Kamera 21 ausgebildet ist. Die Sensorik 19 erkennt eine jeweilige Ist-Position der im ungeordneten Massenstrom mittels der Horizontalfördereinrichtung 13 transportierten Artikel 9. In Bewegungsrichtung BR auf den Detektionsbereich der Sensorik 19 bzw. der Kamera 21 folgt ein Arbeitsbereich eines Manipulators 15, der vorliegend beispielsweise als Deltakinematik-Roboter 17 ausgebildet sein kann. Allerdings kann der Manipulator 15 wahlweise auch als Portalroboter oder als Mehrachsroboter o. dgl. ausgebildet sein. Die Sensorik 19 bzw. die Kamera 21 und der Manipulator 15 bzw. Deltakinematik-Roboter 17 stehen mit einer Steuerungseinheit S in Verbindung. Die Signalverbindungen zwischen den einzelnen Komponenten 15, 17, 19, 21 und der Steuerungseinheit S sind in Fig. 1 nicht eingezeichnet.

Unter Zuhilfenahme der Sensorik 19 erkennt die Steuerungseinheit S eine jeweilige Ist-Position der auf der Horizontalfördereinrichtung 13 befindlichen bzw. stehenden und im ungeordneten Massenstrom bewegten einzelnen Artikel 9. Unter Berücksichtigung der jeweiligen Ist-Positionen wird der Manipulator 15 über die Steuerungseinheit S zum Abholen der jeweiligen Artikel 9 aus dem ungeordneten Massenstrom angesteuert. Der Manipulator 15 kann hierbei jeweils genau einen Artikel 9 oder in weiteren denkbaren Ausführungsformen zumindest näherungsweise zeitgleich mehrere Artikel 9 des ungeordneten Massenstromes aufnehmen. Im Ausführungsbeispiel der Fig. 1 ist lediglich ein einzelner Manipulator 15 dargestellt. Für weitere Ausführungsformen kann es jedoch sein, dass mehrere Manipulatoren 15 vorgesehen sind, welche einzelne Artikel 9 aus dem ungeordneten Massenstrom abholen. Die mehreren Manipulatoren 15 sind sinnvollerweise in ihren Bewegungen aufeinander abgestimmt, so dass sie nicht miteinander kollidieren können.

Die Vorrichtung 1 umfasst zudem mehrere benachbarte Gassen 4a, 4b, 4c, 4d für Artikel 9, welche mehreren benachbarten Gassen 4a, 4b, 4c und 4d in einer Strömungsrichtung bzw. in Bewegungsrichtung BR der Vielzahl an Artikeln 9 auf die Horizontalfördereinrichtung 13 folgen. Die mehreren Gassen 4a, 4b, 4c und 4d werden durch mehrere parallel zueinander orientierte Trennwände 6 gebildet bzw. voneinander abgetrennt. Die Trennwände 6 sind hierbei derart positioniert, dass ein jeweiliger Artikel 9 mit geringem Spiel in eine jeweilige Gasse 4a, 4b, 4c bzw. 4d eintreten kann und mit geringem Spiel in seiner jeweiligen Gasse 4a, 4b, 4c, 4d bewegt werden kann. Hierzu befindet sich ein Transportband unterhalb der durch die Trennwände 6 gebildeten Gassen 4a, 4b, 4c, 4d.

Die Steuerungseinheit S kann den Manipulator 15 zum Überführen des jeweiligen aus dem ungeordneten Massenstrom abgeholten Artikels 9 in eine jeweilige bestimmte Soll-Position ansteuern, in welcher jeweiligen bestimmten Soll-Position der jeweilige Artikel 9 mit einer der mehreren Gassen 4a, 4b, 4c, oder 4d fluchtet.

Nach fluchtender Ausrichtung bzw. nach Überführung der Vielzahl an einzelnen Artikeln 9 in ihre jeweilige Soll-Position werden die Artikel 9 in Richtung der mehreren Gassen 4a, 4b, 4c und 4d weiterbewegt, wobei die Artikel 9 ihre fluchtende Ausrichtung gegenüber ihrer jeweiligen Gasse 4a, 4b, 4c bzw. 4d beibehalten. Die Fig. 1 lässt erkennen, dass durch die fluchtende Ausrichtung im Bereich des Manipulators 15 bereits zum Beschicken der Gassen 4a, 4b, 4c bzw. 4d vorgesehene Reihen an Artikeln 9 gebildet wurden. Die relative Beabstandung aufeinanderfolgender Artikel 9 einer jeweiligen Reihe ist im Bereich des Manipulators 15 noch inhomogen ausgebildet. Um die Artikel 9 über die Gassen 4a, 4b, 4c, 4d einer Arbeitsstation, wie beispielsweise einer Palettierstation oder dergleichen, zuführen zu können, ist es zweckmäßig, die relative Beabstandung aufeinanderfolgender Artikel 9 einer jeweilige Reihe definiert vorzugeben.

Den mehreren Gassen 4a, 4b, 4c und 4d und dem Manipulator 15 ist daher vorzugsweise eine in Fig. 1 nicht mit dargestellte Einrichtung zwischengeordnet, welche die relative Beabstandung aufeinanderfolgender Artikel 9 einer jeweiligen Reihe definiert vorgibt bzw. bedarfsweise vorgeben kann. Zeitlich nach Vorgabe der relativen Beabstandung aufeinanderfolgender Artikel 9 zueinander treten die jeweiligen Reihen an Artikeln 9 in ihre jeweilige Gasse 4a, 4b, 4c bzw. 4d ein, wobei eine jeweilige Reihe aufeinanderfolgender Artikel 9, wie vorhergehend bereits erwähnt, zwischen unmittelbar benachbarten Trennwänden 6 mit geringem Spiel geführt wird.

Über die Steuerungseinheit S wird mittels Verarbeitung der von der Sensorik 19 bzw. von der Kamera 21 gelieferten Sensorsignale zudem eine jeweilige Drehrichtung der im ungeordneten Massenstrom durch die Horizontalfördereinrichtung 13 transportierten Artikel 9 festgestellt. Unter Berücksichtigung der jeweiligen erkannten Drehrichtung überführt der Manipulator 15 auf Veranlassung der Steuerungseinheit S die Artikel 9 aus dem ungeordneten Massenstrom in ihre jeweilige Soll-Position und stellt zeitlich überlagert eine drehrichtungskonforme Orientierung für die Artikel 9 her, so dass die Artikel 9 ihre jeweilige Soll-Position mit drehrichtungskonformer Orientierung erreichen. Insbesondere bei durch Getränkebehältnisse 8 ausgebildete Artikel 9, welche eine mehreckige Querschnittsfläche besitzen, ist ein solches Überführen der Getränkebehältnisse 8 in eine bestimmte drehrichtungskonforme Orientierung zweckmäßig, damit die Getränkebehältnisse 8 in ihre jeweilige Gasse 4a, 4b, 4c, 4d eintreten und in ihrer jeweiligen Gasse 4a, 4b, 4c, bzw. 4d mit geringem Spiel bewegt werden können.

Es kann sinnvoll sein, beim Drehen der Artikel 9 jeweils die Drehrichtung zu bevorzugen, die einen kleineren Drehwinkel benötigt. Auf diese Weise kann schneller gedreht und schneller ein weiterer Artikel 9 erfasst, positioniert und/oder gedreht werden.

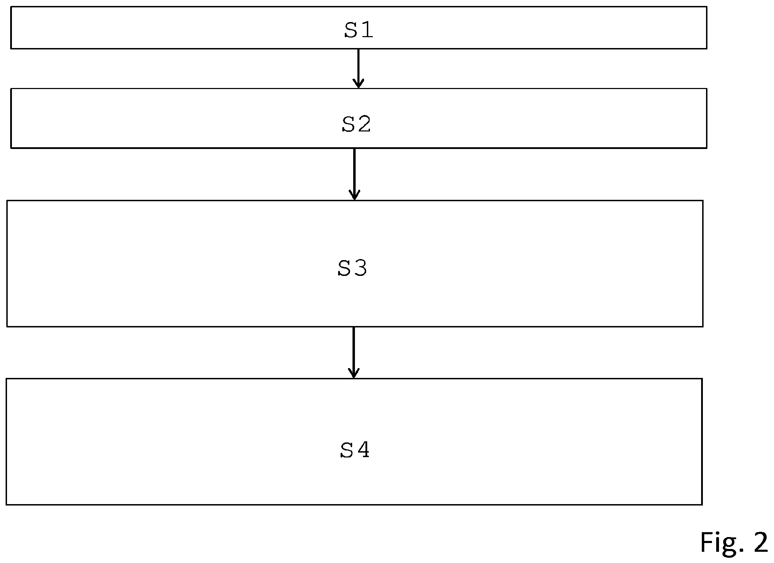

Das Ablaufdiagramm der Fig. 2 zeigt einzelne Schritte, wie sie bei einer denkbaren Ausführungsform des erfindungsgemäßen Verfahrens vorgesehen sein können. So wird im Rahmen eines ersten Schrittes S1 eine Vielzahl an Artikeln 9 in einem ungeordneten Massenstrom transportiert. Die Vielzahl an Artikeln 9 kann hierbei auf einer Horizontalfördereinrichtung 13 stehen bzw. mittels einer Horizontalfördereinrichtung 13 bewegt werden (vgl. Fig. 1).

Ein weiterer Schritt S2 des Verfahrens sieht ein sensorisches Erkennen der einzelnen Ist-Positionen der Vielzahl an Artikeln 9 während ihres Transportes im ungeordneten Massenstrom vor. Beispielsweise können die Ist-Positionen der einzelnen Artikel 9 der Vielzahl von Artikeln 9 über eine Kamera 21 (vgl. Fig. 1) sensorisch erkannt werden. Bei diesem Verfahrensschritt S2 können zudem je nach Bedarf auch Ist-Orientierungen der Artikel 9 erfasst werden, was insbesondere bei mehreckigen Behältern sinnvoll sein kann, da diese nicht nur in den Gassen 4a, 4b, 4c und/oder 4d positioniert werden, sondern ggf. auch verdreht werden müssen, um die Artikel 9 mit jeweils fluchtenden Seitenflächen hintereinander in die Gassen 4a, 4b, 4c und/oder 4d zu bringen.

Nachfolgend wird in einem dritten Verfahrensschritt S3 die Vielzahl an Artikeln 9 aus dem ungeordneten Massenstrom unter Berücksichtigung der sensorisch erkannten einzelnen Ist-Positionen abgeholt. Hierauf werden die einzelnen abgeholten Artikel 9 der Vielzahl in eine jeweilige Soll-Position überführt, woraus resultierend die einzelnen in ihre jeweilige Soll-Position überführten Artikel jeweils mit einer aus mehreren Gassen 4a, 4b, 4c, 4d (vgl. Fig. 1) fluchten.

Nach Überführen der einzelnen Artikel 9 in ihre jeweilige Soll-Position werden die Artikel 9 in die mehreren Gassen entlang eines jeweiligen Verbringungsweges befördert (vierter Verfahrensschritt S4), wobei die einzelnen Artikel 9 der Vielzahl von Artikeln 9 bei Beförderung entlang des jeweiligen Verbringungsweges ihre fluchtende Orientierung gegenüber ihrer jeweiligen Gasse 4a, 4b, 4c bzw. 4d beibehalten.

### Bezugszeichenliste

- 1: Vorrichtung
- 3: Zulauf
- 4a: Gasse
- 4b: Gasse
- 4c: Gasse
- 4d: Gasse
- 5: Transportband
- 6: Trennwand
- 8: Getränkebehältnis
- 9: Artikel
- 11: Puffersystem
- 13: Horizontalfördereinrichtung
- 15: Manipulator
- 17: Roboter, Deltakinematik-Roboter
- 19: Sensorik
- 21: Kamera

- BR: Bewegungsrichtung
- S: Steuerungseinheit

- S1: erster Schritt, erster Verfahrensschritt
- S2: zweiter Schritt, zweiter Verfahrensschritt
- S3: dritter Schritt, dritter Verfahrensschritt
- S4: vierter Schritt, vierter Verfahrensschritt

## Patentansprüche

1. Verfahren zum Verteilen einer Vielzahl an Artikeln (9) eines ungeordneten Massenstromes an mehrere benachbarte Gassen (4a, 4b, 4c, 4d), welche durch mehrere parallel zueinander orientierte Trennwände (6) bereitgestellt werden, zwischen welchen Trennwänden (6) sich die einzelnen Artikel (9) der Vielzahl mit geringem Spiel bewegen können, wobei das Verfahren zumindest die folgenden Schritte (S1, S2) umfasst:
- Transportieren (S1) der Vielzahl an Artikeln (9) in einem ungeordneten Massenstrom,
- sensorisches Erkennen (S2) der einzelnen Ist-Positionen der Vielzahl an Artikeln (9) während ihres Transportes im ungeordneten Massenstrom,
**gekennzeichnet durch** die Schritte (S3, S4):
- Abholen (S3) der Vielzahl an Artikeln (9) aus dem ungeordneten Massenstrom unter Berücksichtigung der sensorisch erkannten einzelnen Ist-Positionen und Überführen der Vielzahl abgeholter Artikel (9) in eine jeweilige Soll-Position, woraus resultierend die einzelnen in ihre jeweilige Soll-Position überführten Artikel (9) jeweils mit einer der mehreren Gassen (4a, 4b, 4c, 4d) fluchten,
- Befördern (S4) der Vielzahl in ihre jeweiligen Soll-Positionen überführten Artikel (9) in die mehreren Gassen (4a, 4b, 4c, 4d) entlang eines jeweiligen Verbringungsweges, wobei die einzelnen Artikel (9) der Vielzahl von Artikeln (9) bei Beförderung entlang des jeweiligen Verbringungsweges ihre fluchtende Orientierung gegenüber ihrer jeweiligen Gasse (4a, 4b, 4c, 4d) beibehalten.

2. Verfahren nach Anspruch 1, bei dem die Vielzahl an Artikeln (9) über wenigstens ein Transportband (5) in mindestens einer Reihe transportiert werden, aus der mindestens einen Reihe in den ungeordneten Massenstrom gebracht werden und im ungeordneten Massenstrom über wenigstens eine Horizontalfördereinrichtung (13) transportiert werden, wobei die wenigstens eine Horizontalfördereinrichtung (13) gegenüber dem wenigstens einen Transportband (5) eine vergrößerte, sich ungefähr lotrecht zur Bewegungsrichtungsrichtung (BR) der Vielzahl an Artikeln (9) erstreckende Förderbreite besitzt.

3. Verfahren nach Anspruch 1 oder 2, bei dem die einzelnen Ist-Positionen der Vielzahl an Artikeln (9) während ihres Transportes im ungeordneten Massenstrom mittels mindestens einer vorzugsweise als Kamera (21) ausgebildeten optischen Erfassungseinrichtung sensorisch erkannt werden.

4. Verfahren nach einem der Ansprüche 1 bis 3, bei dem die einzelnen Ist-Orientierungen der Vielzahl an Artikeln (9) während ihres Transportes im ungeordneten Massenstrom mittels mindestens einer vorzugsweise als Kamera (21) ausgebildeten optischen Erfassungseinrichtung sensorisch erkannt werden.

5. Verfahren nach einem der Ansprüche 1 bis 4, bei dem mindestens zwei Artikel (9) aus dem ungeordneten Massenstrom abgeholt und zeitlich überlagert in ihre jeweilige Soll-Position überführt werden.

6. Verfahren nach einem der Ansprüche 1 bis 5, bei dem es sich bei der Vielzahl an Artikeln (9) um eine Vielzahl an Getränkebehältnissen (8) mit jeweils mehreckiger Querschnittsfläche handelt.

7. Verfahren nach einem der Ansprüche 1 bis 6, bei dem die mehreren Gassen (4a, 4b, 4c, 4d) mit jeweils einer gleichmäßigen Anzahl an Artikeln (9) beschickt werden.

8. Verfahren nach einem der Ansprüche 1 bis 7, bei dem die mehreren Gassen (4a, 4b, 4c, 4d) jeweils zur weitgehend abstandslosen Beförderung von Artikeln (9) mit variablen Geschwindigkeiten fördern können.

9. Verfahren nach einem der Ansprüche 1 bis 8, bei dem unter Berücksichtigung der jeweiligen erkannten Ist-Positionen Wegstrecken zur Überführung des jeweiligen Artikels (9) in eine fluchtende Orientierung für die mehreren Gassen (4a, 4b, 4c, 4d) jeweils überprüft und die Wegstrecke mit kürzestem Betrag ihrer Erstreckung festgestellt und/oder ermittelt wird, und wobei eine jeweilige Soll-Position für den jeweiligen Artikel (9) in Abhängigkeit des kürzesten Betrages der Wegstrecke ausgewählt wird.

10. Verfahren nach einem der Ansprüche 1 bis 9, bei dem
- im Rahmen der sensorischen Erkennung (S2) einzelne Drehorientierungen der Vielzahl an Artikeln (9) während ihres Transportes im ungeordneten Massenstrom festgestellt werden und
- die Vielzahl an Artikeln (9) unter Berücksichtigung der jeweils festgestellten Drehorientierung in eine bestimmte drehkonforme Ausrichtung gebracht werden, so dass die Vielzahl an Artikeln (9) ihre jeweilige Soll-Position in der jeweiligen drehkonformen Ausrichtung erreichen und wobei vorzugsweise vorgesehen ist, dass
- Artikel (9), deren festgestellte Drehorientierung von der drehkonformen Ausrichtung abweicht, zeitlich während ihrer Überführung in ihre jeweilige Soll-Position in die jeweilige bestimmte drehkonforme Ausrichtung gebracht werden und bei welchem Verfahren insbesondere vorgesehen ist, dass
- gedrehte Artikel (9) in eine Richtung gedreht werden, die einen minimalen Drehwinkel erfordert, um den der jeweilige Artikel (9) zu drehen ist.

11. Vorrichtung (1) zum Umgang mit einer Vielzahl an Artikeln (9) eines ungeordneten Massenstromes, umfassend:
- wenigstens eine Horizontalfördereinrichtung (13) zum Transport der Vielzahl an Artikeln (9) im ungeordneten Massenstrom,
- mindestens eine Sensorik (19), über welche eine jeweilige Ist-Position der im ungeordneten Massenstrom transportieren Artikel (9) erkannt werden kann,
- mehrere benachbarte Gassen (4a, 4b, 4c, 4d) für Artikel (9), welche auf die wenigstens eine Horizontalfördereinrichtung (13) in einer Strömungsrichtung der Vielzahl an Artikeln (9) folgen und welche durch mehrere parallel zueinander orientierte Trennwände (6) bereitgestellt werden, zwischen welchen Trennwänden (6) sich die einzelnen Artikel (9) der Vielzahl mit geringem Spiel bewegen können, **dadurch gekennzeichnet, dass** die Vorrichtung
- mindestens einen Manipulator (15) sowie eine Steuerungseinheit (S) umfasst, wobei der mindestens eine Manipulator (15) und die mindestens eine Sensorik (19) mit der Steuerungseinheit (S) in Verbindung stehen, welcher Manipulator (15)
a) zum Abholen wenigstens eines im ungeordneten Massenstrom transportierten Artikels (9) mit der mindestens einen Sensorik (19) in Wirkverbindung steht und welcher
b) zum Überführen des jeweiligen wenigstens einen aus dem ungeordneten Massenstrom abgeholten Artikels (9) in eine jeweilige bestimmte Soll-Position ausgebildet ist, in welcher jeweiligen bestimmten Soll-Position der jeweilige wenigstens eine Artikel (9) mit mindestens einer der mehreren Gassen (4a, 4b, 4c, 4d) fluchtet.

12. Vorrichtung nach Anspruch 11, umfassend einen Zulauf (3), welcher wenigstens ein Transportband (5) besitzt, wobei das wenigstens eine Transportband (5) der wenigstens einen Horizontalfördereinrichtung (13) unmittelbar vorgeordnet ist und über welches wenigstens eine Transportband (5) die Vielzahl an Artikeln (9) in mindestens einer Reihe transportierbar ist, wobei eine Förderbreite der wenigstens einen Horizontalfördereinrichtung (13) gegenüber einer Förderbreite des wenigstens einen Transportbandes (5) vergrößert ausgebildet ist.

13. Vorrichtung nach Anspruch 11 oder 12, bei welcher die mindestens eine Sensorik (19) wenigstens eine optische Erfassungseinrichtung besitzt.

14. Vorrichtung nach einem der Ansprüche 11 bis 13, bei welcher die wenigstens eine optische Erfassungseinrichtung mindestens ein Kamerasystem und/oder mindestens einen Lasersensor besitzt.

15. Vorrichtung nach einem der Ansprüche 11 bis 14, bei welcher der mindestens eine Manipulator (15) zum gemeinsamen Abholen wenigstens zweier im ungeordneten Massenstrom transportierter Artikel (9) sowie zum gemeinsamen Überführen der jeweiligen mindestens zwei abgeholten Artikel (9) in ihre jeweilige bestimmte Soll-Position ausgebildet ist.

16. Vorrichtung nach einem der Ansprüche 11 bis 15, bei welcher die mindestens eine Sensorik (19) zum Feststellen einzelner Drehorientierungen der Vielzahl an Artikeln (9) des ungeordneten Massenstromes ausgebildet ist und bei welcher der mindestens eine Manipulator (15) zum Herstellen einer drehkonformen Orientierung für die Vielzahl an Artikeln (9) mit der mindestens einen Sensorik (19) in Wirkverbindung steht.

17. Vorrichtung nach einem der Ansprüche 11 bis 16, bei welcher der mindestens eine Manipulator (15) wenigstens einen Deltakinematik-Roboter (17) umfasst.

18. Vorrichtung nach einem der Ansprüche 11 bis 17, bei welcher dem mindestens einen Manipulator (15) wenigstens eine Arbeitsstation funktional nachgeordnet ist, über welche der relative Abstand unmittelbar aufeinanderfolgender für eine jeweilige Gasse vorgesehener Artikel (9) vorgegeben werden kann.

19. Vorrichtung nach einem der Ansprüche 11 bis 18, welche zum Umgang mit einer Vielzahl durch Getränkebehältnisse mit mehreckiger Querschnittsfläche ausgebildeten Artikeln (9) vorbereitet ist.

## Claims

1. A method used to distribute a multitude of articles (9) of a disordered mass flow to a plurality of adjacent lanes (4a, 4b, 4c, 4d), the lanes being supplied by a plurality of partitions (6) oriented parallel to each other, between which partitions (6) the individual articles (9) of the multitude of articles (9) can move with little play, wherein the method comprises at least the following steps (S1, S2):
- transporting (S1) of a multitude of articles (9) in a disordered mass flow,
- sensor-detecting (S2) of the individual actual positions of the multitude of articles (9) during their transport in the disordered mass flow,
**characterised by** the steps (S3, S4):
- collecting (S3) of the multitude of articles (9) from the disordered mass flow in consideration of the sensor-detected individual actual positions and transfer of the multitude of collected articles (9) each into a particular target position, with the result that the individual articles (9), which have each been transferred into their particular target positions, are in each instance aligned with one of the plurality of lanes (4a, 4b, 4c, 4d),
- conveying (S4) of the multitude of articles (9), which have each been transferred into their particular target positions, into the plurality of lanes (4a, 4b, 4c, 4d) along a particular transfer path, wherein the individual articles (9) of the multitude of articles (9) each maintain their aligned orientation in relation to their particular lane (4a, 4b, 4c, 4d) while being conveyed along the particular transfer path.

2. The method according to claim 1, in which the multitude of articles (9) are transported in at least one row via at least one transport belt (5), are brought out of the at least one row into the disordered mass flow, and are transported in the disordered mass flow via at least one horizontal conveying device (13), wherein the at least one horizontal conveying device (13) has a conveying width extending approximately perpendicular to the movement direction (BR) of the multitude of articles (9), which conveying width is increased in relation to the at least one transport belt (5).

3. The method according to claim 1 or 2, in which the individual actual positions of the multitude of articles (9) are sensor-detected during their transport in the disordered mass flow by means of at least one optical detection device that is preferably designed as camera (21).

4. The method according to one of the claims 1 to 3, in which the individual actual orientations of the multitude of articles (9) are sensor-detected during their transport in the disordered mass flow by means of at least one optical detection device that is preferably designed as camera (21).

5. The method according to one of the claims 1 to 4, in which at least two articles (9) are collected from the disordered mass flow and are in temporal overlap transferred each into their particular target positions.

6. The method according to one of the claims 1 to 5, in which the multitude of articles (9) is a multitude of beverage containers (8) in each instance with a polygonal cross-sectional area.

7. The method according to one of the claims 1 to 6, in which the plurality of lanes (4a, 4b, 4c, 4d) are fed in each instance with a uniform number of articles (9).

8. The method according to one of the claims 1 to 7, in which the plurality of lanes (4a, 4b, 4c, 4d) can in each instance convey at variable speeds for the largely unspaced conveying of articles (9).

9. The method according to one of the claims 1 to 8, in which path distances for the transfer of the particular article (9) into an aligned orientation for the plurality of lanes (4a, 4b, 4c, 4d) are in each instance checked in consideration of the particular detected actual positions, and the path distance with the shortest value of extension thereof is determined and/or identified, and wherein a particular target position for the particular article (9) is selected based on the shortest value of the path distance.

10. The method according to one of the claims 1 to 9, in which
- individual rotational orientations of the multitude of articles (9) are determined in the context of the sensor-detecting (S2) during the transport of the articles (9) in the disordered mass flow, and
- the multitude of articles (9) are brought into a specific rotation-conforming alignment in consideration of the in each instance determined rotational orientation, such that the multitude of articles (9) each reach their particular target positions in the particular rotation-conforming alignment, and wherein it is preferably provided that
- articles (9) with their determined rotational orientation deviating from the rotation-conforming alignment are each brought into the particular specific rotation-conforming alignment temporally during their transfer into their particular target positions, and in which method it is particularly provided that
- rotated articles (9) are rotated in a direction requiring a minimal rotation angle by which the particular article (9) is to be rotated.

11. A device (1) used to handle a multitude of articles (9) of a disordered mass flow, the device (1) comprising:
- at least one horizontal conveying device (13) for the transport of the multitude of articles (9) in the disordered mass flow,
- at least one sensor system (19), by means of which a particular actual position of the articles (9) that are being transported in the disordered mass flow can be detected,
- a plurality of adjacent lanes (4a, 4b, 4c, 4d) for articles (9), the lanes (4a, 4b, 4c, 4d) following in a flow direction of the multitude of articles (9) upon the at least one horizontal conveying device (13) and being supplied by a plurality of partitions (6) oriented parallel to each other, between which partitions (6) the individual articles (9) of the multitude of articles can move with little play, **characterised in that** the device
- comprises at least one manipulator (15) as well as a control unit (S), wherein the at least one manipulator (15) and the at least one sensor system (19) are in communication with the control unit (S), which manipulator (15)
a) is in operative connection with the at least one sensor system (19) for the purpose of collecting at least one article (9) that is being transported in the disordered mass flow, and which manipulator (15)
b) is configured for the transfer of the particular at least one article (99) collected from the disordered mass flow into a particular specific target position, in which particular specific target position the particular at least one article (9) is aligned with at least one of the plurality of lanes (4a, 4b, 4c, 4d).

12. The device according to claim 11, comprising an infeed (3), which has at least one transport belt (5), wherein the at least one transport belt (5) is disposed immediately upstream from the at least one horizontal conveying device (13), and via which at least one transport belt (5) the multitude of articles (9) is transportable in at least one row, wherein a conveying width of the at least one horizontal conveying device (13) is configured to be increased in relation to a conveying width of the at least one transport belt (5).

13. The device according to claim 11 or 12, in which the at least one sensor system (19) has at least one optical detection device.

14. The device according to one of the claims 11 to 13, in which the at least one optical detection device has at least one camera system and/or at least one laser sensor.

15. The device according to one of the claims 11 to 14, in which the at least one manipulator (15) is configured for collecting at least two articles (9) together, which articles (9) are being transported in the disordered mass flow, as well as for transferring the particular at least two collected articles (9) together into their particular specific target positions.

16. The device according to one of the claims 11 to 15, in which the at least one sensor system (19) is configured for determining individual rotational orientations of the multitude of articles (9) of the disordered mass flow, and in which the at least one manipulator (15) is in operative connection with the at least one sensor system (19) for the purpose of producing a rotation-conforming orientation for the multitude of articles (9).

17. The device according to one of the claims 11 to 16, in which the at least one manipulator (15) comprises at least one delta kinematic robot (17).

18. The device according to one of the claims 11 to 17, in which at least one work station is disposed functionally downstream of the at least one manipulator (15), via which work station the relative spacing of immediately successive articles (9) provided for a particular lane can be specified.

19. The device according to one of the claims 11 to 18, which is prepared to handle a multitude of articles (9) formed by beverage containers with a polygonal cross-sectional area.

## Revendications

1. Procédé de distribution d'une pluralité d'articles (9) d'un flux de masse non ordonné à plusieurs ruelles (4a, 4b, 4c, 4d) adjacentes qui sont constituées par plusieurs cloisons (6) orientées parallèlement les unes par rapport aux autres, entre lesquelles cloisons (6) les articles (9) individuels de ladite pluralité peuvent se déplacer avec un faible jeu, le procédé comprenant au moins les étapes (S1, S2) suivantes consistant à:
- transporter (S1) la pluralité d'articles (9) dans un flux de masse non ordonné,
- détecter par capteur (S2) les positions réelles individuelles de la pluralité d'articles (9) lors de leur transport dans le flux de masse non ordonné,
**caractérisé par** les étapes (S3, S4) consistant à:
- enlever (S3) la pluralité d'articles (9) du flux de masse non ordonné, en tenant compte des positions réelles individuelles détectées par capteur, et à transférer la pluralité d'articles (9) enlevés dans une position de consigne respective, d'où résulte que les articles (9) individuels transférés dans leur position de consigne respective sont chacun en alignement avec l'une des plusieurs ruelles (4a, 4b, 4c, 4d),
- transporter (S4) la pluralité d'articles (9) transférés dans leurs positions de consigne respectives, dans les plusieurs ruelles (4a, 4b, 4c, 4d) le long d'un chemin de déplacement respectif, dans lequel les articles (9) individuels de la pluralité d'articles (9) maintiennent leur orientation alignée par rapport à leur ruelle (4a, 4b, 4c, 4d) respective lorsqu'ils sont transportés le long du chemin de déplacement respectif.

2. Procédé selon la revendication 1, dans lequel la pluralité d'articles (9) sont transportés en au moins une rangée par l'intermédiaire d'au moins une bande transporteuse (5), sont amenés à partir de ladite au moins une rangée dans le flux de masse non ordonné et sont transportés dans le flux de masse non ordonné par l'intermédiaire d'au moins un dispositif de transport horizontal (13), dans lequel ledit au moins un dispositif de transport horizontal (13) présente une largeur de transport agrandie par rapport à ladite au moins une bande transporteuse (5), qui s'étend à peu près perpendiculairement à la direction de déplacement (BR) de la pluralité d'articles (9).

3. Procédé selon la revendication 1 ou 2, dans lequel les positions réelles individuelles de la pluralité d'articles (9) sont détectées par capteur lors de leur transport dans le flux de masse non ordonné, au moyen d'au moins un dispositif de détection optique qui, de préférence, est conçu en tant que caméra (21).

4. Procédé selon l'une quelconque des revendications 1 à 3, dans lequel les orientations réelles individuelles de la pluralité d'articles (9) sont détectées par capteur lors de leur transport dans le flux de masse non ordonné, au moyen d'au moins un dispositif de détection optique qui, de préférence, est conçu en tant que caméra (21).

5. Procédé selon l'une quelconque des revendications 1 à 4, dans lequel au moins deux articles (9) sont enlevés du flux de masse non ordonné et sont transférés de manière superposée dans le temps dans leur position de consigne respective.

6. Procédé selon l'une quelconque des revendications 1 à 5, dans lequel la pluralité d'articles (9) est une pluralité de récipients à boisson (8) ayant chacun une aire de section transversale polygonale.

7. Procédé selon l'une quelconque des revendications 1 à 6, dans lequel la pluralité de ruelles (4a, 4b, 4c, 4d) sont chargées chacune d'un nombre régulier d'articles (9).

8. Procédé selon l'une quelconque des revendications 1 à 7, dans lequel, pour transporter des articles (9) dans une large mesure sans espacement, la pluralité de ruelles (4a, 4b, 4c, 4d) peuvent chacune transporter à des vitesses variables.

9. Procédé selon l'une quelconque des revendications 1 à 8, dans lequel des distances pour transférer l'article (9) respectif dans une orientation alignée pour les plusieurs ruelles (4a, 4b, 4c, 4d) sont chacune vérifiées en tenant compte des positions réelles détectées respectives, et la distance ayant la valeur la plus courte de son étendue est constatée et/ou déterminée, et dans lequel une position de consigne respective pour l'article (9) respectif est choisie en fonction de la valeur la plus courte de la distance.

10. Procédé selon l'une quelconque des revendications 1 à 9, dans lequel,
- dans le cadre de la détection par capteur (S2), des orientations de rotation individuelles de la pluralité d'articles (9) sont constatées lors de leur transport dans le flux de masse non ordonné, et
- la pluralité d'articles (9) sont amenés dans une orientation déterminée conforme en rotation, en tenant compte de l'orientation de rotation respectivement constatée, de sorte que la pluralité d'articles (9) atteignent leur position de consigne respective dans l'orientation respective conforme en rotation, et dans lequel il est prévu de préférence que
- des articles (9) dont l'orientation de rotation constatée s'écarte de l'orientation conforme en rotation, sont amenés dans l'orientation déterminée respective conforme en rotation lorsqu'ils sont transférés dans leur position de consigne respective, et dans lequel procédé il est prévu en particulier que
- des articles (9) tournés sont tournés dans une direction qui requiert un angle de rotation minimal selon lequel l'article (9) respectif doit être tourné.

11. Dispositif (1) de manipulation d'une pluralité d'articles (9) d'un flux de masse non ordonné, comprenant:
- au moins un dispositif de transport horizontal (13) destiné à transporter la pluralité d'articles (9) dans le flux de masse non ordonné,
- au moins un système de capteurs (19) par l'intermédiaire duquel une position réelle respective des articles (9) transportés dans le flux de masse non ordonné peut être détectée,
- plusieurs ruelles (4a, 4b, 4c, 4d) voisines pour des articles (9), qui sont disposées en aval dudit au moins un dispositif de transport horizontal (13) dans une direction d'écoulement de la pluralité d'articles (9) et qui sont constituées par plusieurs cloisons (6) orientées parallèlement les unes par rapport aux autres, entre lesquelles cloisons (6) les articles (9) individuels de ladite pluralité peuvent se déplacer avec un faible jeu, **caractérisé par le fait que** le dispositif
- comprend au moins un manipulateur (15) ainsi qu'une unité de commande (S), dans lequel ledit au moins un manipulateur (15) et ledit au moins un système de capteurs (19) sont en communication avec l'unité de commande (S), lequel manipulateur (15)
a) est en liaison active avec ledit au moins un système de capteurs (19) pour enlever au moins un article (9) transporté dans le flux de masse non ordonné, et lequel
b) est conçu pour transférer ledit au moins un article (9) respectif enlevé du flux de masse non ordonné dans une position de consigne déterminée respective; dans laquelle position de consigne déterminée respective, ledit au moins un article (9) respectif est en alignement avec l'une au moins des plusieurs ruelles (4a, 4b, 4c, 4d).

12. Dispositif selon la revendication 11, comprenant une amenée (3) qui possède au moins une bande transporteuse (5), dans lequel ladite au moins une bande transporteuse (5) est disposée directement en amont dudit au moins un dispositif de transport horizontal (13) et par l'intermédiaire de laquelle au moins une bande transporteuse (5) ladite pluralité d'articles (9) peut être transportée en au moins une rangée, dans lequel une largeur de transport dudit au moins un dispositif de transport horizontal (13) est conçue de manière à être agrandie par rapport à une largeur de transport de ladite au moins une bande transporteuse (5).

13. Dispositif selon la revendication 11 ou 12, dans lequel ledit au moins un système de capteurs (19) possède au moins un dispositif de détection optique.

14. Dispositif selon l'une quelconque des revendications 11 à 13, dans lequel ledit au moins un dispositif de détection optique possède au moins un système de caméra et/ou au moins un capteur laser.

15. Dispositif selon l'une quelconque des revendications 11 à 14, dans lequel ledit au moins un manipulateur (15) est conçu pour enlever ensemble au moins deux articles (9) transportés dans le flux de masse non ordonné ainsi que pour transférer ensemble lesdits au moins deux articles (9) enlevés respectifs dans leur position de consigne déterminée respective.

16. Dispositif selon l'une quelconque des revendications 11 à 15, dans lequel ledit au moins un système de capteurs (19) est conçu pour constater des orientations de rotation individuelles de la pluralité d'articles (9) du flux de masse non ordonné et dans lequel ledit au moins un manipulateur (15) est en liaison active avec ledit au moins un système de capteurs (19) pour réaliser une orientation conforme en rotation pour la pluralité d'articles (9).

17. Dispositif selon l'une quelconque des revendications 11 à 16, dans lequel ledit au moins un manipulateur (15) comprend au moins un robot delta cinématique (17).

18. Dispositif selon l'une quelconque des revendications 11 à 17, dans lequel au moins un poste de travail par l'intermédiaire duquel la distance relative séparant des articles (9) immédiatement successifs prévus pour une ruelle respective peut être prédéterminée est monté fonctionnellement en aval dudit au moins un manipulateur (15).

19. Dispositif selon l'une quelconque des revendications 11 à 18, qui est préparé pour manipuler une pluralité d'articles (9) formés par des récipients à boisson ayant une aire de section transversale polygonale.
